# EUROPÄISCHE PATENTSCHRIFT

(11) **EP 2 679 522 B1**
(45) Veröffentlichungstag und Bekanntmachung des Hinweises auf die Patenterteilung: **02.11.2016**
(21) Anmeldenummer: 13003150.3
(22) Anmeldetag: 20.06.2013
(51) Int. Cl.: B65G 15/64

(54) **Transportbandelement zum Transportieren von Gütern, Verfahren zum Führen eines Transportbandelements und Anordnung aus einem Transportbandelement und einer Umlenk- und/oder Antriebswalzenvorrichtung**
Transport belt element for conveying goods, method for guiding a transport belt element and an assembly consisting of a transport belt element and a guiding and/or drive roller device
Elément de bande convoyeuse pour transporter des articles, procédé de guidage d'un élément de bande convoyeuse et agencement constitué d'un élément de bande convoyeuse et d'un dispositif de guidage et/ou d'entraînement à rouleaux

(30) Priorität: 27.06.2012 DE 102012012858
(43) Veröffentlichungstag der Anmeldung: 01.01.2014
(73) Patentinhaber: Knopp-Fördertechnik, 56412 Niederelbert (DE)
(72) Erfinder: Knopp, Hans Werner, 56412 Grossholbach (DE)
(74) Vertreter: Hannke, Christian

(56) Entgegenhaltungen:
- DE-C- 954 043
- GB-A- 1 039 312
- US-A- 5 507 382

## Beschreibung

Die Erfindung betrifft ein Transportbandelement zum Transportieren von Gütern mit einem elastisch biegbaren und flächig ausgestalteten Grundkörper, mit einer Aufnahmefläche zum Aufnehmen der Güter und mit einer Spurführungseinrichtung zum Führen des Transportbandelements an einer Auflagevorrichtung.

Die Erfindung betrifft auch ein Verfahren zum Führen eines Transportbandelements an einer Auflagevorrichtung, bei welchem auf einer Aufnahmefläche des Transportbandelements abgelegte Güter in Laufrichtung des Transportbandelements transportiert werden.

Darüber hinaus betrifft die Erfindung eine Anordnung aus einem Transportbandelement und einer Umlenk- und/oder Antriebswalzenvorrichtung, bei welcher das Transportbandelement auf die Umlenk- und/oder Antriebswalzenvorrichtung aufgelegt ist.

Insbesondere gattungsgemäße Transportbandelemente sind aus dem Stand der Technik vielfältig und gut bekannt, wobei diese Transportbandelemente weitestgehend endlos ausgestaltet und somit umlaufend in einem Gestell angeordnet sind. Die Transportbandelemente werden dabei an Walzenelementen von in dem Gestell gelagerten Umlenk- und/oder Antriebswalzenvorrichtungen geführt und umgelenkt sowie gegebenenfalls mittels diesen angetrieben, falls ein Walzenelement angetrieben ist.

Damit ein diesbezügliches Transportbandelement insbesondere quer zu seiner Umfaufrichtung bzw. Laufrichtung definiert an einem Walzenelement geführt werden kann, sind diesbezügliche Walzenelemente oftmals ballig ausgeformt, wodurch sich der Effekt ergibt, dass das Transportbandelement im umlaufenden Betrieb im Wesentlichen zentrisch an diesem balligen Bereich gehalten und geführt wird. Nachteilig bei derartig ballig ausgestalteten Walzenelementen ist es, dass sich entlang der Seitenbereiche des Transportbandelements zwischen diesem und dem balligen Walzenelement Verschmutzungen anlagern können, welche dem durch die Balligkeit erzielten Führungseffekt empfindlich stören können, sodass eine erforderliche Seitenführung des Transportbandelements an dem balligen Walzenelement nicht mehr ausreichend gewährleistet werden kann, wodurch im schlechtesten Fall das umlaufende Transportbandelement seitlich von dem balligen Walzenelement herunterlaufen und abspringen kann.

Hinsichtlich einer anderen konstruktiven Lösung ist es bekannt, zueinander leicht angestellte Walzenetemente vorzusehen, um ein umlaufendes Transportbandelement in Laufrichtung gesehen, beidseits an seinen Randbereichen stützen zu können, so dass ein seitliches Auswandern des Transportbandelements quer zur Laufrichtung unterbunden werden kann. Diese Lösung ist aufgrund der Vielzahl an erforderlichen Walzenelementen jedoch recht aufwendig.

Hinsichtlich einer besonders einfachen Ausgestaltung einer ein Transportbandelement umfassenden Transportvorrichtung bzw. einer diesbezüglichen Führungseinrichtung kann ein diesbezügliches umlaufendes Transportbandelement lediglich einen Obertrum und einen Untertrum ausbilden, welche im Wesentlichen parallel zueinander geführt sind.

Die Druckschrift GB 1 039 312 A offenbart eine Transportbandvorrichtung mit einem Endlosgürtel. Dieser Gürtel weist sich in Längsrichtung erstreckende Erhebungen und damit auch resultierende Materialschwächen auf. Der Gegenstand von GB 1 039 312 A weist weiter einen Roller zum Führen des Endlosgürtels, der parallele Rillen in Umfangsrichtung aufweist, welche in die Rillen des Gürtels greifen können, auf. Als besondere Form sind im Wesentlichen u-förmige Rillen beschrieben. Ein Verwendungszweck für die Rillen ist nicht explizit angegeben. Nachteilig dabei ist, dass derartige Rollengürtel keinen optimalen Griff auf den Rollen aufweisen und aufgrund dessen Reibverluste auftreten können. Hinzu kommt, dass bei Temperaturverschiebung die Passgenauigkeit zwischen Rillen in dem Gürtel und Erhebungen an den Rollen leiden kann. Bei der Montage und der Herstellung ist auf einen besonders passgenauen Sitz zu achten.

Es ist Aufgabe vorliegender Erfindung, zumindest vorstehend genannte Nachteile im Zusammenhang mit gattungsgemäßen Transportbandelementen zum Transportieren von Gütern zu überwinden. Insbesondere besteht die Aufgabe mit Bezug auf GB 1 039 312 A darin, einen besseren Griff der Kontaktflächen von Roller und Gürtel bereitzustellen, um Energie zu sparen und Materialabnutzung zu reduzieren.

Die Aufgabe der Erfindung wird von einem Transportbandelement zum Transportieren von Gütern mit einem elastisch biegbaren und bandartig ausgestalteten Grundkörper und mit einer Aufnahmefläche zum Aufnehmen der Güter gelöst, wobei das Transportbandelement eine Spurführungseinrichtung mit einem oder mehreren jeweils als Materialschwächung ausgebildeten v-förmigen Rillenelementen aufweist, welche sich in Laufrichtung des Transportbandelements erstreckend in dem elastisch biegbaren Grundkörper angeordnet sind.

Hierdurch wird das Transportbandelement konstruktiv auf besonders einfache Weise an einer Auflageeinrichtung, wie etwa einem Trommelelement einer Umlenk- und/oder Antriebswalzenvorrichtung, gut geführt. Durch eine Keilwirkung hinsichtlich v-förmig ausgestalteter Rillenelemente kann ein besonders vorteilhafter Kraftschluss insbesondere an einem Antriebstrommelelement erzielt werden.

Vorteilhafterweise erfährt das Transportbandelement durch die als Materialschwächung ausgebildeten Rillenelemente sogar noch ein wesentlich verbessertes Biegeverhalten, wodurch das vorliegende Transportbandelement trotz der umfassenden Spurführungseinrichtung sogar an extrem kleinen Umlenk- und/oder Antriebswalzenvorrichtungen bzw. diesbezüglichen Walzenelementen vorteilhaft eingesetzt werden kann, wie nachstehend noch genau erläutert ist.

Vorteilhafterweise kann das erfindungsgemäße Transportbandelement lediglich mit einem einzigen Walzenelement um 180° umgelenkt werden, selbst wenn dieses Walzenelement einen Durchmesser von 12 mm oder von 6 mm aufweist.

Eine besonders vorteilhafte Ausführungsvariante sieht insofern auch vor, dass das Transportbandelement im Bereich der Spurführungseinrichtung derart elastisch biegbar ist, dass es um ein Walzenelement mit einem Durchmesser geringer als 30 mm oder geringer als 20 mm herumgebogen werden kann, so dass ein Einlauftrum und ein Auslauftrum des Transportbandelements insbesondere direkt an dem Walzenelement im Wesentlichen parallel zueinander anordenbar sind. Hierdurch können der Einlauftrum und der Auslauftrum besonders nahe beieinander liegend parallel geführt werden, sodass ein durch das vorliegende Transportbandelement gebildetes Transportband extrem flach ausgestaltet werden kann.

Der vorliegende Grundkörper liegt vorzugsweise als Bandmaterial vor, wobei dieses Bandmaterial geschlossen, glatt, rau, offenporig, als Netzware oder dergleichen vorteilhaft ausgestaltet sein kann, um das Transportbandelement für die verschiedensten Einsatzbereiche optimal auslegen zu können.

Insofern wird die Aufgabe der Erfindung auch von einer Fördervorrichtung zum Fördern von Gütern gelöst, welche sich speziell durch das vorliegende Transportbandelement auszeichnet und insbesondere auch vorliegende Auflagevorrichtung vorteilhaft umfassen kann.

Die Rillenelemente gestalten eine ausgezeichnet gute Spurführungseinrichtung zum Führen des Transportbandelements an einer Auflagevorrichtung insbesondere einer Fördervorrichtung zum Fördern von Gütern.

Darüber hinaus wird die Aufgabe der Erfindung auch von einem Verfahren zum Führen eines Transportbandelements an einer Auflagevorrichtung gelöst, bei welchem auf einer Aufnahmefiäche des Transportbandelements abgelegte Güter in Laufrichtung des Transportbandelements transportiert werden, wobei die Auflageeinrichtung zumindest teilweise in das Transportbandelement eingreift, wenn das Transportbandelement mit diesem in Kontakt gebracht wird, um das Transportbandelement durch die Auflageeinrichtung quer zu seiner Laufrichtung zu führen.

Durch das Eingreifen der Auflageeinrichtung in die Rillenelementen des Transportbandes, wenn diese miteinander in Kontakt gebracht werden, kann mit baulich einfachen Mitteln eine ausgezeichnete Spurführung des Transportbandes erzielt werden.

Die Rillenelemente sind in Längsrichtung des Transportbandelements angeordnet, sodass ein permanentes Eingreifen der jeweiligen Auflagevorrichtung in die Rillenelemente gewährleistet werden kann.

Sind die Rillenelemente darüber hinaus parallel zueinander verlaufend in dem Transportbandelement angeordnet, kann eine besonders hohe Führungsgenauigkeit hinsichtlich des Transportbandelements erreicht werden.

Darüber hinaus ist es vorteilhaft, wenn die Rilfenelemente hinsichtlich der Breite des Transportbandefements zentrisch an dem Grundkörper angeordnet sind. Hierdurch ist gewährleistet, dass das Transportbandelement gegenüber der Auftagevorrichtung mittig besonders gut geführt ist.

Des Weiteren ist es vorteilhaft, wenn die Rillenelemente an ihrem der Aufnahmefläche abgewandten Ende jeweils eine Breite aufweisen, weiche wenigstens die Hälfte der Grundkörperdicke beträgt oder welche gleich der Grundkörperdicke, vorzugsweise größer als die Grundkörperdicke, ist. Durch eine derart gewählte Breite ist es unter anderem auch möglich, dass in die Rillenelemente eingreifende Mantelflächenstegelemente der Auflagevorrichtung mit einer ausreichenden Materialstärke ausgestaltet werden, sodass ein kritisches Einschneiden dieser Mantelflächenstegelemente in das Transportbandelement bzw. in den Grundkörper des Transportbandelements nahezu ausgeschlossen ist.

Sind die Rillenelemente jeweils um einen Abstand voneinander entfernt angeordnet, welcher mindestens die Rillenelementetiefe des Rillenelements oder mehr als das doppelte bzw. das dreifache der Rillenelementetiefe des Rillenelements beträgt, kann zwischen den einzelnen Rillenelementen jeweils eine ausreichend breite Antriebsfläche an dem Transportbandelement zur Verfügung gestellt werden, so dass selbst im Bereich der Rillenelemente eine gute Traktion zwischen dem Transportbandelement und der Auflagevorrichtung gewährleistet werden kann.

In diesem Zusammenhang ist es vorteilhaft, wenn kumulativ oder alternativ zwischen den Rillenelementen jeweils ein planer Antriebsflächenabschnitt des Transportbandelements angeordnet ist, weicher breiter ist als eine Rillenelementebreite und/oder eine Rillenelementetiefe eines der Rillenelemente.

Eine sehr betriebssichere Seitenführung des Transportbandelements an der Auflagevorrichtung kann erzielt werden, wenn die Materialschwächung mehr als 30 % oder mehr als 50 %, vorzugsweise mehr als 70 %, der Grundkörperdicke des Transportbandelements beträgt.

Vorzugsweise erstreckt sich diese Materialschwächung als durchgehende Nut entlang der Längserstreckung des Transportbandelements. Diese Nut ist in Umlenkbereichen des Transportbandelements gebogen ausgestaltet, so dass vorliegend hierdurch zwar jeweils ein sich linear erstreckendes aber als Kurve gekrümmt ausbildbares Rillenelement temporär vorliegt.

Insofern ist es vorteilhaft, wenn die Rillenelemente in Längserstreckung des Transportbandelements bereichsweise als Kurve gekrümmt ausgestaltet sind.

Die Verschleißeigenschaften des vorliegenden Transportbandelements insbesondere an den Mantelflächenstegelementen der Auflagevorrichtung können wesentlich verbessert werden, wenn das Transportbandelement innerhalb der Rillenelemente eine Oberflächenstruktur aufweist, welche von der umliegenden Oberflächenstruktur des Transportbandelements verschieden ist.

Des Weiteren ist es vorteilhaft, wenn das Transportbandelement eine Antriebsfläche aufweist, um mit der Auflagevorrichtung zumindest reibschlüssig wechselzuwirken, wobei die Rillenelemente auf Seite der Antriebsfläche angeordnet sind.

Des Weiteren wird die Aufgabe der Erfindung von einer Anordnung aus einem Transportbandelement und einer Umlenk- und/oder Antriebswalzenvorrichtung gelöst, bei welcher das Transportbandelement auf die Umlenk- und/oder Antriebswalzenvorrichtung aufgelegt ist, wobei die Umlenk- und/oder Antriebswalzenvorrichtung zumindest teilweise in dem Transportbandelement angeordnet ist, um das Transportbandelement speziell quer zu seiner Laufrichtung zu führen.

Hierdurch kann eine besonders einfach zu bauende und eine sehr betriebssichere Spurführung des Transportbandelements an der Umlenk- und/oder Antriebswalzenvorrichtung erzielt werden

Insofern ist es vorteilhaft, wenn die Umlenk- und/oder Antriebswalzenvorrichtung Mantelflächenstegelemente umfasst, welche innerhalb von Rillenelementen des die Umlenk- und/oder Antriebswalzenvorrichtung kontaktierenden Transportbandelements angeordnet sind.

Umfasst insbesondere vorliegende Anordnung noch Gleitauflageeinrichtungen wie an einem Tisch oder dergleichen, ist es vorteilhaft, wenn die Gleitauflageeinrichtungen kumulativ Positionierstegelemente umfasst, welche in die Rillenelemente eingreifen. Hierdurch kann eine zusätzliche Seitenführung des Transportbandelementes erzielt werden.

Eine besonders vorteilhafte Anordnungsvariante sieht vor, dass die Umlenk- und/oder Antriebswalzenvorrichtung ein Walzenelement mit einem Durchmesser von weniger als 30 mm oder von weniger als 20 mm, vorzugsweise von 12 mm oder 6 mm, umfasst. Mittels eines Walzenelements mit einem derart geringen Walzenelementdurchmesser kann die gesamte Anordnung besonders flach und extrem bauteilreduziert ausgelegt werden.

Es versteht sich, dass das Walzenelement der Umfenk- und/oder Antriebswalzenvorrichtung funktional und konstruktiv vielfältig ausgestaltet sein kann, wobei ein diesbezügliches Walzenelement beispielsweise als Antriebstrommelelement, als Umlenktrommelelement, als Einschnürtrommelelement oder dergleichen vorteilhaft ausgestaltet sein kann.

Mittels der vorliegenden Erfindung kann eine extrem konstante Spurführung zwischen dem Transportbandelement und einer diesbezüglichen Auflagevorrichtung gewährleistet werden.

Darüber hinaus ist eine kleinste Übergabe ab einem Trommeldurchmesser von 6 mm oder 12 mm möglich.

Darüber hinaus ist eine besonders betriebssichere Spurführung bei ungünstigem Verhältnis von Länge und Breite des Transportbandelements gewährleistet.

Selbst bei einem unsachgemäßen Einbau, beispielsweise nach einem Reinigungsvorgang, kann sich das vorliegende Transportbandelement gegenüber der Auflagevorrichtung automatisch zentrieren.

Durch die vorliegend in dem Transportbandelement ausgebildeten Rillenelemente, welche mit entsprechenden Mantelflächenstegelementen der Auflagevorrichtung korrespondieren, kann auch eine besonders vorteilhafte Spreizung von mehreren nebeneinander angeordneten und umlaufenden Transportbandelementen erzielt werden.

Insbesondere hierbei ist es vorteilhaft, wenn die Auflagevorrichtung aus einem gleitfähigen Kunststoff hergestellt ist, anstatt etwa aus einem Edelstahl.

Vorzugsweise ist das Transportbandelement vollständig aus einem Polyurethan-Band hergestellt. Es versteht sich, dass jedoch auch andere Kunststoffe zum Herstellen des vorliegenden Transportbandelements verwendet werden können.

Vorteilhaft kann die Spurführungseinrichtung des vorliegenden Transportbandelements bzw. die diesbezüglichen Materialschwächungen hergestellt werden, indem diese Materiaischwächungen durch Längsfräsungen in dem Grundkörper eingebracht werden.

Alternativ kann das vorliegende Transportbandelement mit den diesbezüglichen Materialschwächungen bzw. Rillenelementen genauso gut direkt extrudiert werden.

Darüber hinaus ist es vorteilhaft, wenn die Mantelflächenstegelemente umlaufende Messerkantenelemente beispielsweise mit einem Durchmesser von 16 mm umfassen und als Keilspitzen mit einem Winkel von 38° ausgebildet sind.

Außerdem sind in Bezug auf die Mantelflächenstegelemente eine Teilung von 5 mm und eine Höhe von 1,2 mm vorteilhaft, bei einer Bandbreite von ca. 40 mm hinsichtlich des Transportbandelements. Es versteht sich, dass auch andere Teilungen und Höhen, je nachdem welche Bandbreite vorgesehen ist, vorteilhaft sein können.

Weitere Vorteile, Ziele und Eigenschaften vorliegender Erfindung werden anhand anliegender Zeichnung und nachfolgender Beschreibung erläutert, in weichen beispielhaft eine Anordnung eines erfindungsgemäßen Transportbandelements und einer entsprechenden Auflagevorrichtung dargestellt und beschrieben ist. In der Zeichnung zeigen:
- Figur 1: schematisch eine Anordnung aus einem Transportbandelement umfassend eine Spurführungseinrichtung mit jeweils als Materialschwächung ausgebildeten Rillenelementen, welche sich in Laufrichtung des Transportbandelements erstreckend angeordnet sind, und eine Aufnahmevorrichtung in Gestalt einer Umlenkund/oder Antriebswalzenvorrichtung mit einem Walzenelement, welches zur Spurführung Mantelflächenstegelemente umfasst;
- Figur 2: schematisch eine teilweise geschnittene Ansicht des Transportbandeiements aus der Figur 1;
- Figur 3: schematisch eine Aufsicht der Auflagevorrichtung aus der Figur 1; und
- Figur 4: eine Detailansicht der Auflagevorrichtung aus der Figur 3.

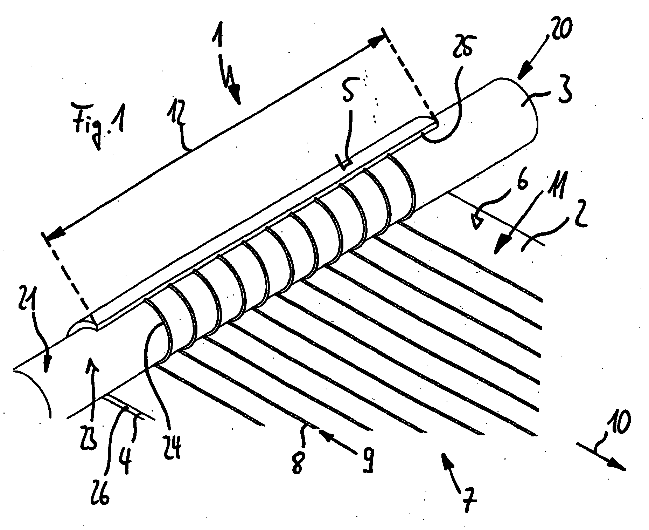

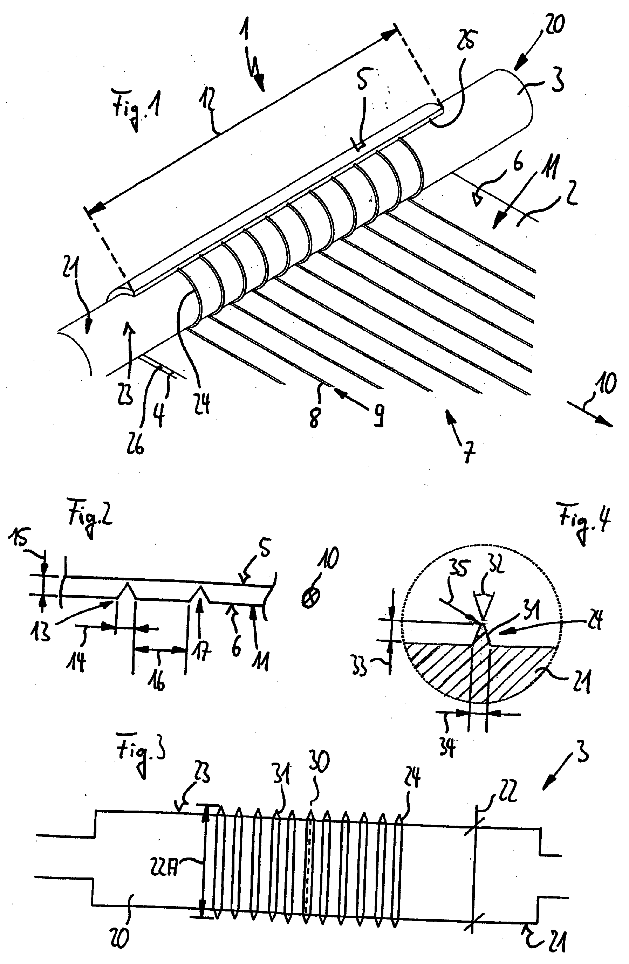

Die in der Figur 1 gezeigte Anordnung 1 setzt sich aus einem Transportbandelement 2 zum Transportieren von hier nicht gezeigten Gütern und einer Aufnahmevorrichtung 3 zusammen, an welcher das Transportbandelement 2 umgelenkt wird.

Das Transportbandelement 2 weist einen elastisch biegbaren, bandartig und flächig ausgestalteten Grundkörper 4 auf. Zudem zeichnet sich das Transportbandelement 2 durch eine Aufnahmefläche 5 zum Aufnehmen der Güter und eine Antriebsfläche 6 zum reibschlüssigen Kontakt mit der Auflagevorrichtung 3 aus.

Darüber hinaus verfügt das Transportbandelement 2 über eine Spurführungseinrichtung 7 zum Führen des Transportbandelements 2 an der Auflagevorrichtung 3. Erfindungsgemäß ist die Spurführungseinrichtung 7 an dem Transportbandelement 2 durch eine Vielzahl jeweils als Materialschwächung 8 (hier nur beispielhaft beziffert) ausgebildeten Rillenelemente 9 (hier nur beispielhaft beziffert) ausgestaltet, wobei sich diese Rillenelemente 9 in Laufrichtung 10 des Transportbandelements 2 erstreckend in dem elastisch biegbarem Grundkörper 4 angeordnet sind.

Die Rillenelementen 9 sind hierbei v-förmig an bzw. auf der Seite 11 der Antriebsfläche 6 angeordnet (siehe auch Figur 2).

Die Rillenelemente 9 sind hierbei in Längsrichtung, welche mit der Laufrichtung 10 zusammenfällt, des Transportbandelements 2 angeordnet und verlaufen in diesem Ausführungsbeispiel parallel zueinander, wobei sie hinsichtlich der Breite 12 des Transportbandelements 2 zentrisch an dem Grundkörper 4 angeordnet sind.

Die Rillenelemente 9 weisen an ihren der Aufnahmefläche 5 abgewandten Ende 13 jeweils eine Rillenelementbreite 14 auf, welche in diesem Ausführungsbeispiel gleich der Grundkörperdicke 15 des Transportbandelements 2 ist.

Die Rillenelemente 9 sind des Weiteren hierbei jeweils um einen Abstand 16 voneinander entfernt angeordnet, welcher mindestens der Rillentiefe 17 des Rillenelements 9 beträgt. Hierdurch ist auch zwischen den einzelnen Rillenelementen 9 eine ausreichende reibschlüssige bzw. eine sehr gute Kontaktmögüchkeit zwischen der Antriebsfläche 6 des Transportbandelements 2 und der Auflagevorrichtung 3 gewährleistet.

Der Abstand 16 verläuft hierbei ebenso wie die Rillenelementbreite 14 quer zur Laufrichtung 10 des Transportbandelements 2.

Die Materialschwächung 8 beträgt in diesem Ausführungsbeispiel mehr als 70 % der Grundkörperdicke 15 des Transportbandelements 2, wodurch die Auflagevorrichtung 3 besonders innig mit dem Transportbandelement 2 bzw. mit den einzelnen Rillenelementen 9 des Transportbandelements 2 wechselwirken kann, so dass eine außerordentlich gute und betriebssichere Spurführung zwischen dem Transportbandelement 2 und der Auflagevorrichtung 3 erzielt ist.

Insofern ist mittels des Abstands 16 ein planer Antriebsflächenabschnitt 18 des Transportbandelements 2 angeordnet, welcher breiter ist als die Rillenelementbreite 14 und die Rillenelementtiefe 17 der Rillenelemente. Insbesondere hierdurch ist eine besonders gute Traktionskontrolle zwischen dem Transportbandelement 2 und der Auflagevorrichtung 3 gewährleistet.

Die Auflagevorrichtung 3 gestaltet in diesem Ausführungsbeispiel eine Umlenk- und Antriebswalzenvorrichtung 20 aus, wobei die Auflagevorrichtung 3 als Walzenelement 21 mit einem Kerndurchmesser 22 von 12 mm ausgestaltet ist.

An der Mantelfläche 23 befinden sich in Umfangsrichtung durchgängig umlaufend Stegmantelflächenelemente 24 (hier nur exemplarisch beziffert), welche in die Rillenelemente 9 des die Auflagevorrichtung 3 zumindest teilweise umschlingenden Transportbandelements 2 eingreifen.

Die Stegmantelflächenelemente 24 haben bei dem hier gewählten Kerndurchmesser 22 von 12 mm einen Effektivdurchmesser 22A von 16 mm.

Hinsichtlich der Anordnung 1 gemäß der Darstellung nach der Figur 1 ist das Transportbandelement 2 derart um das Walzenelement 21 gelegt, dass oberseitig am Walzenelement 21 ein Einlaufitrum 25 des Transportbandelements 2 angeordnet und unterseitig am Walzenelement 21 ein Auslauftrum 26 des Transportbandelements 2 angeordnet sind, wobei der Einlauftrum 25 und der Auslauftrum 26 unmittelbar am dem Walzenelement 21 im Wesentlichen parallel zueinander verlaufend anordenbar sind.

Gemäß der Darstellung nach der Figur 3 ist die Auflagevorrichtung 3 zusätzlich in einer Aufsicht dargestellt, wobei dort gut zu erkennen ist, dass die einzelnen Mantelflächenstegelemente 24 in etwa zentrisch des Walzenelements 21 um die Mitte 30 des Walzenelements 21 herum angeordnet sind, wobei die Mantelffächenstegelemente 24 über die Mantelfläche 23 hervorstehen.

Die Mantelflächenstegelemente 24 sind hierbei als Keilspitzen 31 ausgestaltet, wie insbesondere gemäß der Darstellung der Figur 4 gut ersichtlich ist. Diese Keilspitzen 31 weisen jeweils einen Keilspitzenwinkel 32 von 38° auf. Und sie besitzen eine Keilspitzenhöhe 33 von 0,8 mm sowie eine Keilspitzenfußbreite 34 von 0,7 mm.

Somit passen sie sehr gut in die etwa 1 mm tiefen Rillenelemente 9, ohne dabei in den Grundkörper 4 des Transportbandelements 2 zu schneiden. Zusätzlich weisen die Keilspitzen 31 an ihrer äußeren Kante einen Spitzenradius 35 von 0,1 auf.

Es versteht sich, dass es sich bei dem vorstehend erläuterten Ausführungsbeispiel lediglich um eine erste Ausgestaltung des erfindungsgemäßen Transportbandelements handelt. Insofern beschränkt sich die Ausgestaltung der Erfindung nicht auf dieses Ausführungsbeispiel.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Anordnung
- 2: Transportbandelement
- 3: Auflagevorrichtung
- 4: Grundkörper
- 5: Aufnahmefläche
- 6: Antriebsfläche
- 7: Spurführungseinrichtung
- 8: Materialschwächung
- 9: Rillenelemente
- 10: Laufrichtung
- 11: Seite
- 12: Transportbandbreite
- 13: abgewandtes Ende
- 14: Rillenelementbreite
- 15: Grundkörperdicke
- 16: Abstand
- 17: Rillenelementtiefe
- 18: planer Antriebsflächenabschnitt
- 20: Umlenk- und Antriebswalzenvorrichtung
- 21: Walzenelement
- 22: Kerndurchmesser
- 22A: Effektivdurchmesser
- 23: Mantelfläche
- 24: Mantelflächenstegelemente
- 25: Einlauftrum
- 26: Auslauftrum
- 30: Mitte
- 31: Keilspitzenelemente
- 32: Keilspitzenwinkel
- 33: Keilspitzenhöhe
- 34: Keilspitzenfußbreite
- 35: Keilspitzenradius

## Patentansprüche

1. Transportbandelement (2) zum Transportieren von Gütern mit einem elastisch biegbaren und bandartig ausgestalteten Grundkörper (4) und mit einer Aufnahmefläche (5) zum Aufnehmen der Güter, wobei das Transportbandelement (2) eine Spurführungseinrichtung (7) mit einem oder mehreren jeweils als Materialschwächung (8) ausgebildeten Rillenelementen (9) aufweist, welche sich in Laufrichtung (10) des Transportbandelements (2) erstreckend in dem elastisch biegbaren Grundkörper (4) angeordnet sind.
**dadurch gekennzeichnet, dass**
die Rillenelemente (9) v-förmig ausgestaltet sind.

2. Transportbandelement (2) nach Anspruch 1,
**dadurch gekennzeichnet, dass**
die Rilfenelemente (9) an ihrem der Aufnahmefläche (5) abgewandten Ende (13) jeweils eine Rillenelementebreite (14) aufweisen, welche wenigstens die Hälfte der Grundkörperdicke (15) beträgt oder welche gleich der Grundkörperdicke (15), vorzugsweise größer als die Grundkörperdicke (15), ist.

3. Transportbandelement (2) nach einem der Ansprüche 1 bis 2,
**dadurch gekennzeichnet, dass**
die Rillenelemente (9) jeweils um einen Abstand (16) voneinander entfernt angeordnet sind, welcher mindestens die Rillenelementetiefe (17) des Rülenelements (9) oder mehr als das Doppelte bzw. mehr als das Dreifache der Rillenelementetiefe (17) des Rillenelemente (9) beträgt.

4. Transportbandelement (2) nach einem der Ansprüche 1 bis 3,
**dadurch gekennzeichnet, dass**
zwischen den Rillenelementen (9) jeweils ein planer Antriebsflächenabschnitt (18) des Transportbandelements (2) angeordnet ist, welcher breiter ist als eine Rillenelementebreite (14) und/oder eine Rillenelementetiefe (17) eines der Rillenelemente (9).

5. Transportbandelement (2) nach einem der Ansprüche 1 bis 4,
**dadurch gekennzeichnet, dass**
die Materialschwächung (8) mehr als 30% oder mehr als 50%, vorzugsweise mehr als 70%, der Grundkörperdicke (15) des Transportbandelements (2) beträgt.

6. Transportbandelement (2) nach einem der Ansprüche 1 bis 5,
**dadurch gekennzeichnet, dass**
die Spurführungseinrichtung (7) derart elastisch biegbar ist, dass das Transportbandelement (2) um ein Walzeneiement (21) mit einem Walzenelementkerndurchmesser (22) geringer als 30 mm oder geringer als 20 mm hierum gebogen angeordnet ist, dass ein Einlauftrum (25) und ein Auslauftrum (26) des Transportbandelements (2) vor oder an dem Walzenelement (21) im Wesentlichen parallel zueinander anordenbar sind.

7. Transportbandelement (2) nach einem der Ansprüche 1 bis 6,
**dadurch gekennzeichnet, dass**
das Transportbandelement (2) eine Antriebsfläche (6) aufweist, um mit der Auflagevorrichtung (3) zumindest reibschlüssig wechselzuwirken, wobei die Rillenelemente (9) auf Seiten der Antriebsfläche (6) angeordnet sind.

8. Verfahren zum Führen eines Transportbandelements (2) nach einem der Ansprüche 1 bis 7 an einer Auflagevorrichtung (3), bei welchem auf einer Aufnahmefläche (5) des Transportbandelements (2) abgelegte Güter in Laufrichtung (10) des Transportbandelements (2) transportiert werden, wobei die Auflageeinrichtung (3) zumindest teilweise in das Transportbandelement (2) eingreift, wenn das Transportbandelement (2) mit diesem in Kontakt gebracht wird, um das Transportelement (2) durch die Auflagevorrichtung (3) quer zu seiner Laufrichtung (10) zu führen.

9. Anordnung (1) aus einem Transportbandelement (2) nach einem der Ansprüche 1 bis 7 und einer Umlenk- und/oder Antriebswalzenvorrichtung (20), bei welcher das Transportbandelement (2) auf die Umlenk- und/oder Antriebswalzenvorrichtung (20) aufgelegt ist,
**dadurch gekennzeichnet, dass**
die Umlenk- und/oder Antriebswalzenvorrichtung (20) zumindest teilweise in dem Transportbandelement (2) angeordnet ist, um das Transportbandelement (2) speziell quer zu seiner Laufrichtung (10) zu führen.

10. Anordnung (1) nach Anspruch 9,
**dadurch gekennzeichnet, dass**
die Umlenk- und/oder Antriebswalzenvorrichtung (20) Mantefflächenstegelemente (24) umfasst, welche in Rillenelementen (9) des die Umlenk- und/oder Antriebswalzenvorrichtung (20) kontaktierenden Transportbandelements (2) angeordnet sind.

## Claims

1. A conveyor belt element (2) for transporting goods with a base body (4) that is elastically flexible and designed in a belt-shaped manner and with a reception surface (5) for receiving goods, wherein the conveyor belt element (2) includes a lane guidance unit (7) having one or more groove elements (9) formed as material weakening (8), which groove elements are provided in the elastically flexible base body (4) so as to extend in the running direction (10) of the conveyor belt element (2),
**characterised in that**
the groove elements (9) are designed to be v-shaped.

2. The conveyor belt element (2) as claimed in claim 1,
**characterised in that**
each of the groove elements (9) has a groove element width (14) at the end (13) thereof that faces away from the reception surface (5), which groove element width amounts to at least half of the base body thickness (15) or which is equal to the base body thickness (15), preferably greater than the base body thickness (15).

3. The conveyor belt element (2) as claimed in any one of claims 1 to 2,
**characterised in that**
the groove elements (9) are spaced apart from each other by a distance (16) that amounts to at least the groove element depth (17) of the groove element (9) or to more than twice or more than three times the groove element depth (17) of the groove element (9).

4. The conveyor belt element (2) as claimed in any one of claims 1 to 3,
**characterised in that**
in each case a planar drive surface section (18) of the conveyor belt element (2) is provided between the groove elements (9), which drive surface section (18) is wider than a groove element width (14) and/or a groove element depth (17) of any one of the groove elements (9).

5. The conveyor belt element (2) as claimed in any one of claims 1 to 4,
**characterised in that**
the material weakening (8) amounts to more than 30% or more than 50%, preferably more than 70%, of the base body thickness (15) of the conveyor belt element (2).

6. The conveyor belt element (2) as claimed in any one of claims 1 to 5,
**characterised in that**
the lane guidance unit (7) is elastically flexible in such a way that the conveyor belt element (2) is provided bent around a roller element (21) with a roller element core diameter (22) of less than 30 mm or less than 20 mm, **in that** an inlet run (25) and an outlet run (26) of the conveyor belt element (2) may be provided substantially parallel to each other before or on the roller element (21).

7. The conveyor belt element (2) as claimed in any one of claims 1 to 6,
**characterised in that** the conveyor belt element (2) has a drive surface (6) for interacting with the support device (3) at least in a force locking manner, wherein the groove elements (9) are provided at the drive surface (6).

8. A method for guiding a conveyor belt element (2) as claimed in any one of claims 1 to 7 on a support device (3), on which goods deposited on a reception surface (5) of the conveyor belt element (2) are transported in the running direction (10) of the conveyor belt element (2), wherein the support unit (3) at least partially engages in the conveyor belt element (2) once the conveyor belt element (2) has been brought into contact therewith, in order to guide the conveyor belt element (2) by the support device (3) transversely to the running direction (10) thereof.

9. An assembly (1) of a conveyor belt element (2) as claimed in any one of claims 1 to 7 and a deflection and/or drive roller device (20), wherein the conveyor belt element (2) is deposited on the deflection and/or drive roller device (20),
**characterised in that** the deflection and/or drive roller device (20) is at least partially provided in the conveyor belt element (2), in order to guide the conveyor belt element (2) specifically transversely to its running direction (10).

10. The assembly (1) as claimed in claim 9,
**characterised in that** the deflection and/or drive roller device (20) comprises lateral surface web elements (24), which are provided in groove elements (9) of the conveyor belt element (2) contacting the deflection and/or drive roller drive (20).

## Revendications

1. Elément bande transporteuse (2) destiné à transporter des articles, comprenant un corps de base (4) configuré de manière élastique et flexible en forme de bande et une surface de réception (5) destinée à recevoir les articles, l'élément bande transporteuse (2) comprenant un dispositif de guidage sur voie (7) pourvu d'un ou de plusieurs éléments rainure (9) qui sont réalisés chacun sous la forme d'un affaiblissement de matériau (8) et qui sont agencés en se prolongeant dans le corps de base (4) élastique et flexible dans le sens de marche (10) de l'élément bande transporteuse (2),
**caractérisé en ce que**
les éléments rainure (9) sont réalisés en forme de v.

2. Elément bande transporteuse (2) selon la revendication 1,
**caractérisé en ce que**
les éléments rainure (9) présentent à leur extrémité (13) opposée à la surface de réception (5) respectivement une largeur (14) d'élément rainure, laquelle mesure au moins la moitié de l'épaisseur (15) du corps de base ou laquelle est identique à l'épaisseur (15) du corps de base, de préférence supérieure à l'épaisseur (15) du corps de base.

3. Elément bande transporteuse (2) selon l'une quelconque des revendications 1 à 2,
**caractérisé en ce que**
les éléments rainure (9) sont agencés chacun à distance les uns des autres selon un écart (16) qui mesure au moins la profondeur (17) d'élément rainure de l'élément rainure (9) ou plus du double ou plus du triple de la profondeur (17) d'élément rainure de l'élément rainure (9).

4. Elément bande transporteuse (2) selon l'une quelconque des revendications 1 à 3,
**caractérisé en ce que**
entre les éléments rainure (9) est dispocée à chaque fois une section de surface d'entraînement (18) plane de l'élément bande transporteuse (2), laquelle est plus large qu'une largeur (14) d'élément rainure et/ou qu'une profondeur (17) d'élément rainure d'un des éléments rainure (9).

5. Elément bande transporteuse (2) selon l'une quelconque des revendications 1 à 4,
**caractérisé en ce que**
l'affaiblissement de matériau (8) mesure plus de 30 % ou plus de 50 %, de préférence plus de 70 %, de l'épaisseur (15) du corps de base de l'élément bande transporteuse (2).

6. Elément bande transporteuse (2) selon l'une quelconque des revendications 1 à 5,
**caractérisé en ce que**
le dispositif de guidage sur voie (7) est élastique et flexible, de telle manière que l'élément bande transporteuse (2) est agencé courbé autour d'un élément rouleau (21) présentant un diamètre de coeur (22) d'élément rouleau inférieur à 30 mm ou inférieur à 20 mm, **en ce qu'**un brin d'entrée (25) et un brin de sortie (26) de l'élément bande transporteuse (2) peuvent être agencés sensiblement parallèlement l'un à l'autre devant ou sur l'élément rouleau (21).

7. Elément bande transporteuse (2) selon l'une quelconque des revendications 1 à 6,
**caractérisé en ce que**
l'élément bande transporteuse (2) présente une surface d'entraînement (6), afin de coopérer au moins par friction avec le dispositif de support (3), les éléments rainure (9) étant agencés à de la surface d'entraînement (6).

8. Procédé de guidage d'un élément bande transporteuse (2) selon l'une quelconque des revendications 1 à 7 sur un dispositif de support (3), selon lequel des articles déposés sur une surface de réception (5) de l'élément bande transporteuse (2) sont transportés dans le sens de marche (10) de l'élément bande transporteuse (2), le dispositif de support (3) s'insérant au moins en partie dans l'élément bande transporteuse (2) lorsque l'élément bande transporteuse (2) est amené en contact avec ce dernier, afin de guider l'élément bande transporteuse (2) par le dispositif de support (3) transversalement au sens de marche (10) de ce dernier.

9. Ensemble (1) composé d'un élément bande transporteuse (2) selon l'une quelconque des revendications 1 à 7 et d'un dispositif à rouleau de renvoi et/ou d'entraînement (20), auquell'élément bande transporteuse (2) est posé sur le dispositif à rouleau de renvoi et/ou d'entraînement (20),
**caractérisé en ce que**
le dispositif à rouleau de renvoi et/ou d'entraînement (20) est agencé au moins en partie dans l'élément bande transporteuse (2), afin de guider l'élément bande transporteuse (2) en particulier transversalement au sens de marche (10) de ce dernier.

10. Ensemble (1) selon la revendication 9,
**caractérisé en ce que**
le dispositif à rouleau de renvoi et/ou d'entraînement (20) comprend des éléments saillie de surface laterale (24), lesquels sont agencés dans les éléments rainure (9) de l'élément bande transporteuse (2) en contact avec le dispositif à rouleau de renvoi et/ou d'entraînement (20).
